# FASCICULE DE BREVET EUROPEEN

(11) **EP 0 962 733 B1**
(45) Date de publication et mention de la délivrance du brevet: **30.07.2003**
(21) Numéro de dépôt: 99420129.1
(22) Date de dépôt: 04.06.1999
(51) Int. Cl.: F27B 9/14, F27B 9/24, F27D 5/00, F27B 9/22, B65G 23/30

(54) **Procédé et dispositif de cuisson d'articles céramiques dans un four tunnel**
Brennverfahren und Brennanlage für keramische Erzeugnisse im Tunnelofen
Firing process and device for ceramic articles in a tunnel furnace

(30) Priorité: 05.06.1998 FR 9807260
(43) Date de publication de la demande: 08.12.1999
(73) Titulaire: Réfractaires et Concepts Céramiques, 41600 Lamotte Beuvron (FR)
(72) Inventeur: Jonnard, Pierre M., 41210 Saint Viatre (FR)
(74) Mandataire: Hubert, Philippe

(56) Documents cités:
- EP-A- 0 786 636
- DE-A- 3 425 625
- DE-A- 3 914 509
- DE-C- 580 493

## Description

La présente invention a pour objet un procédé de cuisson d'articles céramiques dans un four tunnel, et un dispositif pour sa mise en oeuvre.

Les articles céramiques, tels que des tuiles utilisées pour la couverture de bâtiments, sont obtenus par moulage, puis, après séchage, subissent une opération de cuisson.

Cette opération de cuisson est souvent réalisée à l'intérieur de fours tunnels.

Dans un premier type de four, les articles sont chargés sur des wagons ou chariots, et peuvent être empilés les uns sur les autres sur une hauteur relativement importante. Les wagons traversent le four en roulant sur des rails. Cette solution permettant l'empilage des articles à cuire permet de disposer d'un four de plus faible longueur pour un volume intérieur déterminé.

Une deuxième catégorie de four vise les fours sans wagons dans lesquels sont mis en oeuvre des éléments porteurs disposés en travers du four et qui supportent directement les produits à cuire. Dans ce cas, il n'est généralement possible de ne placer qu'une seule couche d'articles à cuire dans le four, ce qui oblige à étaler le volume intérieur du four sur une très grande surface. L'encombrement au sol d'un tel four devient alors important. Le déplacement des articles à cuire est obtenu soit en déplaçant les éléments porteurs de l'entrée du four vers la sortie, soit en laissant les éléments porteurs en place mais en imprimant, grâce à ceux-ci, un mouvement aux articles à cuire, pour conduire ceux-ci de l'entrée du four vers la sortie de celui-ci.

Les articles devant subir un cycle de cuisson peuvent être disposés de deux façons différentes dans les fours à wagons. Suivant une première solution, les articles sont disposés sensiblement verticalement, ce qui permet de bénéficier d'une bonne densité de remplissage, puisque chacun des produits occupe une surface limitée à sa plus petite section, sur un niveau de chargement. Toutefois, les articles étant libres de tout déplacement, il n'est pas possible d'empêcher leur déformation lors de la mise en température.

Suivant une autre solution, les articles à cuire sont disposés à plat sur un profil adapté à leur forme et à leurs dimensions. La déformation durant la cuisson est parfaitement contrôlée puisque l'article vient se conformer au profil de la surface qui le soutient. Toutefois, chaque article occupe une surface égale à sa plus grande surface projetée, ce qui conduit à la réalisation d'un four de très grande surface.

Une solution intermédiaire consiste à disposer les articles sur un support incliné, ce compromis permettant de conserver une partie des avantages de la cuisson sur support horizontal, sans occuper toute la place d'une cuisson totalement à plat. Toutefois cette solution intermédiaire ne permet d'atteindre ni la qualité géométrique d'une cuisson à plat, ni la compacité du four dans le cas d'une cuisson verticale.

Le but de l'invention est de fournir un procédé de cuisson d'articles céramiques dans un four, permettant d'obtenir une excellente qualité géométrique des articles, une bonne compacité du four tunnel, et permettant une manipulation aisée des articles aux postes de chargement et de déchargement de ceux-ci, en amont et en aval du four.

A cet effet, le procédé qu'elle concerne, consistant à déposer chaque article sur un support puis à le déplacer à l'intérieur d'un four pour réaliser sa cuisson, est caractérisé en ce qu'il consiste à placer chaque article sur un support inclinable entre une position sensiblement horizontale et une position sensiblement verticale, et à faire varier l'inclinaison du support pour que celui-ci soit sensiblement horizontal au moins dans la zone du four dans laquelle la température est telle que l'article à cuire devient plastique.

En outre, le procédé consiste à modifier l'écartement entre deux supports successifs dans le sens de déplacement de ceux-ci, de telle sorte que l'écartement entre les supports augmente lorsque les supports sont basculés à l'horizontale et diminue lorsqu'ils sont basculés à la verticale.

Chaque article à cuire est déposé sur un support inclinable comportant par exemple une surface de soutien adapté. Il est donc possible, durant la phase de passage aux plus hautes températures du cycle de cuisson, au cours de laquelle l'article devient plastique et se déforme sous son propre poids, de placer le support à plat. En dehors de cette phase, la position de l'article est indifférente pour le bon respect de sa géométrie. Il est donc possible, au cours des autres phases, de placer les supports en position verticale ou proche de la verticale et de limiter leur écartement, pour obtenir un ensemble plus compact, et limiter ainsi la longueur du four.

Suivant un mode de mise en oeuvre ce procédé consiste à agir sur l'écartement entre les supports pour modifier l'inclinaison de ceux-ci.

Suivant une autre caractéristique, ce procédé consiste, pour chaque support, à le positionner sensiblement à l'horizontale au poste de chargement des articles, à le faire ensuite basculer vers une position inclinée, cette position inclinée étant maintenue lors du transfert du support à l'intérieur du four, à le faire basculer dans une position sensiblement horizontale dans la zone de chauffage maximal ou dans la zone de température dans laquelle l'article est dans un état malléable, et enfin à l'amener en position inclinée jusqu'au poste de déchargement où le support est ramené à plat.

Il peut être noté que les supports sont placés en position horizontale aux postes de chargement et de déchargement, ce qui facilite les conditions de manutention.

Dans un dispositif pour la mise en oeuvre de ce procédé, comprenant des supports d'articles, chaque support d'article est monté pivotant sur une embase mobile, telle qu'un chariot, autour d'un axe horizontal et transversal à la direction de déplacement des supports, des moyens étant prévus pour assurer le pivotement de chaque support autour de son axe.

Avantageusement ce dispositif comprend des moyens de réglage de l'écartement entre les embases des supports, la longueur des embases étant inférieure à la longueur des supports.

Dans la mesure où les embases possèdent une longueur inférieure à celle des supports, il est possible de rapprocher les embases les unes des autres lorsque les supports sont en position inclinée, et de les écarter pour permettre le positionnement sensiblement à l'horizontale des supports, notamment dans la zone de chauffage maximal où les articles sont dans un état plastique.

Suivant une forme d'exécution de ce dispositif chaque support est équipé d'une série de bielles parallèles articulées d'une part sur la face inférieure du support et d'autre part sur l'embase du support voisin autour d'axes horizontaux et transversaux à la direction de déplacement des supports.

Il peut être noté que chaque bielle peut agir directement entre une embase et le support disposé sur l'embase suivante, ou par l'intermédiaire d'un jeu de bielles.

Suivant une autre forme d'exécution de ce dispositif, chaque support est équipé, sur sa face inférieure, d'un levier monté solidaire du support, et des éléments profilés formant cames, sont disposés en-dessous du parcours des supports, l'extrémité libre du levier prenant appui sur les éléments profilés pour faire pivoter le support considéré.

En outre, les moyens de réglage de l'écartement entre les embases des supports sont constitués par les moyens d'entraînement en déplacement des embases.

De toute façon l'invention sera bien comprise à l'aide de la description qui suit, en référence au dessin schématique annexé, représentant, à titre d'exemples non limitatifs, plusieurs formes d'exécution de ce dispositif.
- Figure 1 est une vue très schématique de côté de l'ensemble d'un dispositif.
- Figures 2 à 4 sont trois vues également schématiques et à échelle agrandie de trois formes d'exécution correspondant à trois possibilités d'inclinaison des supports d'articles.

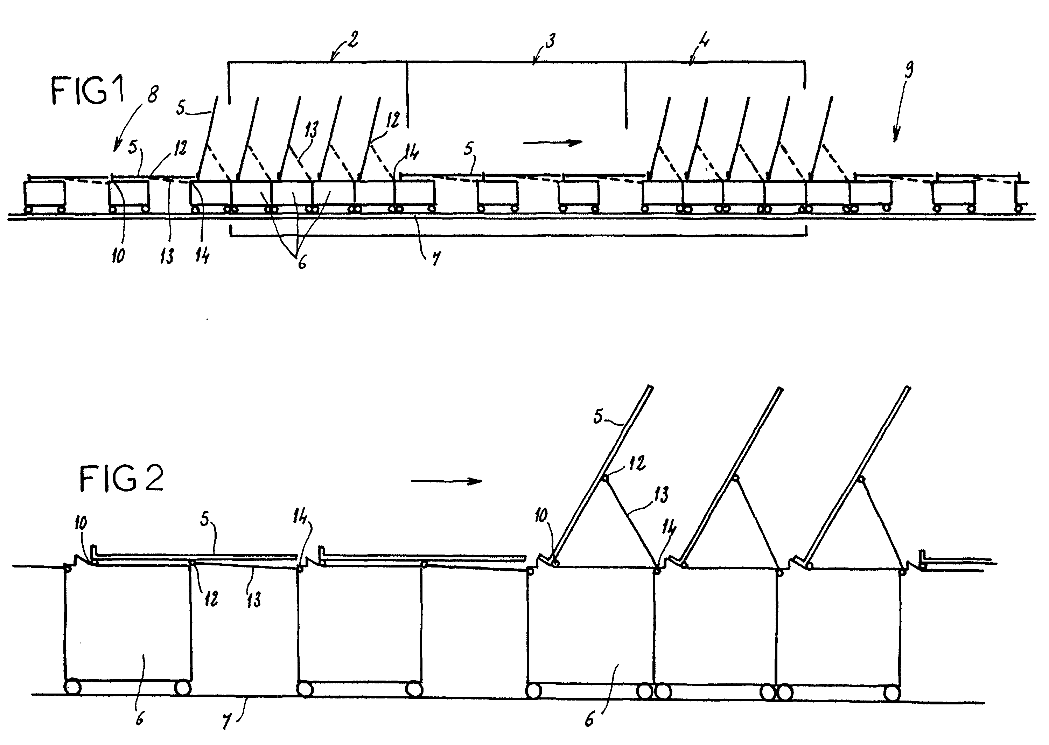

La figure 1 représente une installation de cuisson comportant un four tunnel comprenant trois zones, une zone 2 de début de cuisson, une zone 3 de cuisson maximale ou zone de plein-feu, dans laquelle les articles sont amenés à un état plastique, et une zone 4 de refroidissement. Les articles, non représentés au dessin, sont placés sur des supports 5 reposant eux-mêmes sur des embases 6 constituées par des chariots déplaçables sur des rails 7. Le poste de chargement des articles sur les supports est désigné par la référence 8, et le poste de déchargement est désigné par la référence 9.

Suivant une caractéristique essentielle de l'invention, chaque support 5 est inclinable par rapport à l'embase 6 à laquelle il est associé, entre une position sensiblement horizontale et une position sensiblement verticale.

A cet effet, chaque support est monté pivotant autour d'un axe 10, horizontal et transversal à la direction de déplacement des supports. Dans la forme d'exécution représentée à la figure 2, l'axe d'articulation 10 est situé à une extrémité du support 5, à proximité d'une extrémité d'un chariot 6. La longueur du support 5 est supérieure à celle du chariot 6, de telle sorte que le support dépasse longitudinalement du chariot, lorsque le support est en position sensiblement horizontale.

Sur la face arrière de chaque support 5 est articulée, autour d'un axe 12 parallèle à l'axe 10, au moins une bielle 13 dont l'autre extrémité est articulée autour d'un axe 14 parallèle à l'axe 12, sur le chariot 4 disposé en avant ou en arrière dans le sens de déplacement des chariots. En conséquence, lorsque les chariots sont écartés, les supports 5 sont sensiblement en position horizontale, comme montré à la partie gauche de figure 2, tandis que lorsque les chariots sont rapprochés les uns des autres, le pivotement des bielles 13 amène les supports 5 dans une position inclinée se rapprochant de la verticale, comme montré à la partie droite de la figure 2.

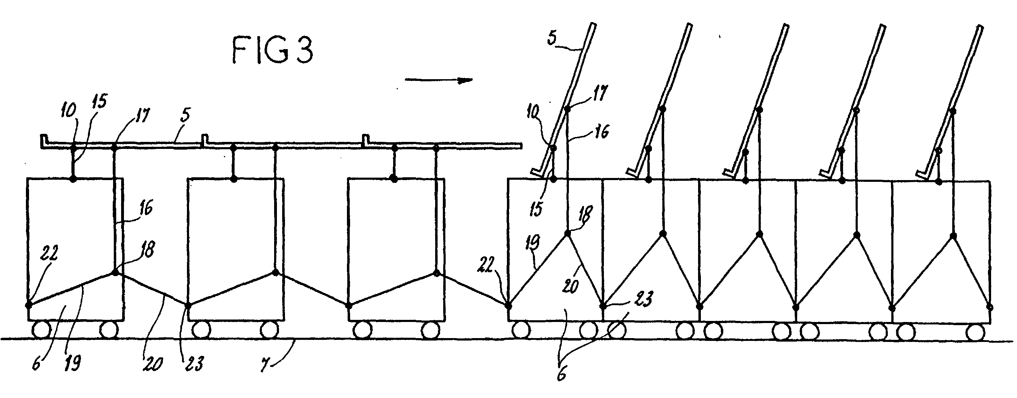

La figure 3 représente une variante d'exécution dans laquelle les mêmes éléments sont désignés par les mêmes références que précédemment. Dans ce cas, chaque support 5 n'est pas articulé directement sur le chariot, mais sur des pattes 15 solidaires du chariot, ce qui permet de surélever le support par rapport au chariot. En outre, le mouvement de pivotement de chaque support est obtenu à l'aide d'une bielle 16 demeurant toujours en position verticale dont une extrémité est articulée sur la face arrière du support 5, en 17, et dont l'autre extrémité est articulée en 18, toujours autour d'un axe transversal, horizontal et transversal au déplacement des chariots, sur deux bielles 19 et 20, la bielle 19 étant articulée autour d'un axe 22 de même orientation que les précédents sur le chariot 6 considéré, et l'autre extrémité de la bielle 20 étant articulée autour d'un axe 23 sur un chariot voisin. Le mode d'inclinaison des supports résulte, comme précédemment, du rapprochement ou de l'écartement des chariots.

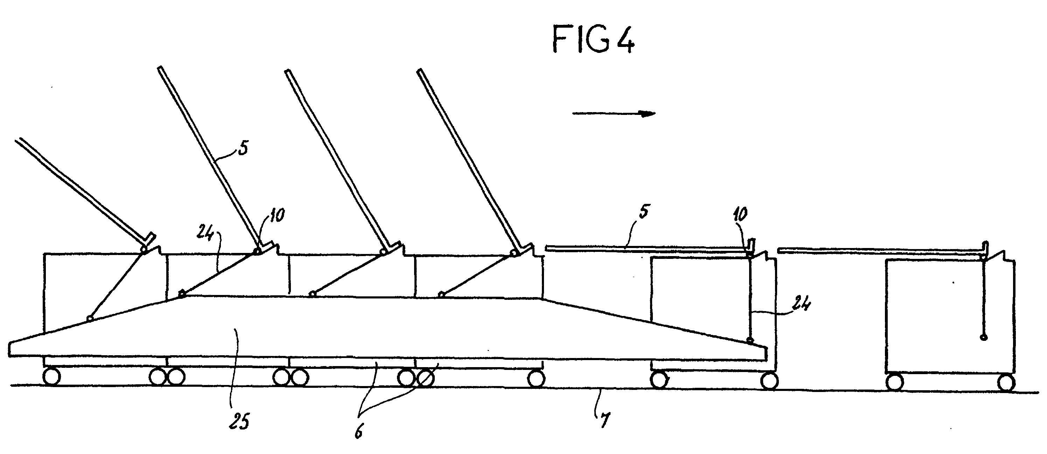

Dans la forme d'exécution représentée à la figure 4, chaque support est équipé d'un levier 24, dont il est solidaire, ce levier 24 étant susceptible de prendre appui sur une rampe 25 disposée à côté des rails de déplacement des chariots 6 et formant came, dans les zones où le support doit être basculé vers une position se rapprochant de la verticale.

Comme il ressort de ce qui précède, l'invention apporte une grande amélioration à la technique existante, en fournissant un procédé et un dispositif pour la cuisson de produits céramiques à l'intérieur d'un four tunnel, permettant de concilier les avantages de précision des articles subissant une cuisson à plat, et de compacité des dispositifs dans lesquels les articles sont disposés en position inclinée.

Comme il va de soi l'invention ne se limite pas aux seules formes d'exécution de ce dispositif décrites ci-dessus à titre d'exemples, l'étendue de l'invention étant déterminée par les revendications. C'est ainsi notamment que les embases des supports pourraient ne pas être constituées par des chariots, mais par des plateaux déplacés par exemple par l'intermédiaire d'un transporteur, sans que l'on sorte pour autant du cadre de l'invention.

## Revendications

1. Procédé de cuisson d'articles céramiques dans un four, consistant à déposer chaque article sur un support puis à le déplacer à l'intérieur d'un four pour réaliser sa cuisson, **caractérisé en ce qu'**il consiste à placer chaque article sur un support (5) inclinable entre une position sensiblement horizontale et une position sensiblement verticale, et à faire varier l'inclinaison du support (5) pendant le déplacement de la dite embase pour que celui-ci soit sensiblement horizontal au moins dans la zone (3) du four dans laquelle la température est telle que l'article à cuire devient plastique.

2. Procédé de cuisson selon la revendication 1, **caractérisé en ce qu'**il consiste à modifier l'écartement entre deux supports (5) successifs dans le sens de déplacement de ceux-ci, de telle sorte que l'écartement entre les supports (5) augmente lorsque les supports sont basculés à l'horizontale et diminue lorsqu'ils sont basculés à la verticale.

3. Procédé de cuisson selon la revendication 2, **caractérisé en ce qu'**il consiste à agir sur l'écartement entre les supports (5) pour modifier l'inclinaison de ceux-ci.

4. Procédé de cuisson selon l'une quelconque des revendications 1 à 3, **caractérisé en ce qu'**il consiste, pour chaque support (5), à le positionner sensiblement à l'horizontale au poste (8) de chargement des articles, à le faire ensuite basculer vers une position inclinée, cette position inclinée étant maintenue lors du transfert du support à l'intérieur du four, à le faire basculer dans une position sensiblement horizontale dans la zone (3) de chauffage maximal ou dans la zone de température dans laquelle l'article est dans un état malléable, et enfin à l'amener en position inclinée jusqu'au poste de déchargement (9) où le support est ramené à plat.

5. Dispositif pour la cuisson d'articles en céramique dans un four, comprenant des supports d'articles, **caractérisé en ce que** chaque support (5) d'article est monté pivotant sur une embase mobile (6), telle qu'un chariot, autour d'un axe (10) horizontal et transversal à la direction de déplacement des supports, des moyens étant prévus pour assurer le pivotement de chaque support autour de son axe pendant le déplacement de la dite embase.

6. Dispositif selon la revendication 5, **caractérisé en ce qu'**il comprend des moyens de réglage de l'écartement entre les embases des supports, la longueur des embases étant inférieure à la longueur des supports.

7. Dispositif selon l'une quelconque des revendications 5 et 6, **caractérisé en ce que** chaque support (5) est équipé d'une série de bielles (13, 16, 19, 20) parallèles articulées d'une part sur la face inférieure du support et d'autre part sur l'embase du support voisin autour d'axes (12, 14, 17, 18, 22, 23) horizontaux et transversaux à la direction de déplacement des supports.

8. Dispositif selon l'une quelconque des revendications 5 et 6, **caractérisé en ce que** chaque support (5) est équipé, sur sa face inférieure, d'un levier (24) monté solidaire du support, et des éléments profilés (25) formant cames, sont disposés en-dessous du parcours des supports (5), l'extrémité libre du levier prenant appui sur les éléments profilés pour faire pivoter le support considéré.

9. Dispositif selon la revendication 6, **caractérisé en ce que** les moyens de réglage de l'écartement entre les embases des supports sont constitués par les moyens d'entraînement en déplacement des embases.

## Patentansprüche

1. Brennverfahren für keramische Erzeugnisse in einem Ofen, das aufweist: Plazieren jedes Erzeugnisses auf einem Träger, dessen anschließendes Einbringen ins Innere eines Ofens zur Durchführung des Brennens, **dadurch gekennzeichnet, daß** es aufweist: Plazieren jedes Erzeugnisses auf einem Träger (5), der zwischen einer im wesentlichen horizontalen Position und einer im wesentlichen vertikalen Position neigbar ist, und Verändern der Neigung des Trägers (5) während des Verschiebens des Trägers, damit dieser zumindest in der Zone (3) des Ofens, in dem die Temperatur derart ist, daß das zu brennende Erzeugnis plastisch wird, im wesentlichen horizontal ist.

2. Brennverfahren nach Anspruch 1, **dadurch gekennzeichnet, daß** es aufweist: Verändern des Abstands zwischen zwei aufeinanderfolgenden Trägern (5) in deren Verschiebungsrichtung in der Art, daß der Abstand zwischen den Trägern (5) zunimmt, wenn die Träger in der Horizontalen gekippt sind, und abnimmt, wenn sie in der Vertikalen gekippt sind.

3. Brennverfahren nach Anspruch 2, **dadurch gekennzeichnet, daß** es das Einwirken auf den Abstand zwischen den Trägern (5), um deren Neigung zu verändern, aufweist.

4. Brennverfahren nach einem der Ansprüche 1 bis 3, **dadurch gekennzeichnet, daß** es aufweist: im wesentlichen horizontales Positionieren jedes Trägers (5) an der Beladungsstelle (8) für die Erzeugnisse, dann deren Kippen in eine geneigte Position, wobei diese geneigte Position während der Verlagerung des Trägers ins Innere des Ofens aufrechterhalten wird, deren Kippen in eine im wesentlichen horizontale Position in der Zone (3) mit der maximalen Heizung oder in der Zone der Temperatur, bei der das Erzeugnis in einem formbaren Zustand ist, und schließlich das Bringen in eine geneigte Position bis zur Entnahmestelle (9), wo der Träger wieder in die flache Lage gebracht wird.

5. Brennanlage für keramische Erzeugnisse in einem Ofen, die Träger für die Erzeugnisse aufweist, **dadurch gekennzeichnet, daß** jeder Erzeugnisträger (5) auf einem beweglichen Sockel (6), wie etwa einem Wagen, um eine horizontale und zur Richtung der Verschiebung der Träger transversale Achse (10) schwenkbar montiert ist, wobei Einrichtungen vorgesehen sind, die während der Verschiebung des Sockels das Schwenken jedes Trägers um seine Achse herum sicherstellen.

6. Anlage nach Anspruch 5, **dadurch gekennzeichnet, daß** sie Einrichtungen zum Einstellen des Abstands zwischen den Sockeln der Träger aufweist, wobei die Länge der Sockel geringer als die Länge der Träger ist.

7. Anlage nach einem der Ansprüche 5 und 6, **dadurch gekennzeichnet, daß** jeder Träger (5) mit einer Reihe von parallelen gelenkigen Steuergestängen (13, 16, 19, 20) einerseits auf der Seite unter dem Träger und andererseits auf dem Sockel des benachbarten Trägers um die horizontalen und zur Richtung der Verschiebung der Träger transversalen Achsen (12, 14, 17, 18, 22, 23) herum ausgestattet ist.

8. Anlage nach einem der Ansprüche 5 und 6, **dadurch gekennzeichnet, daß** jeder Träger (5) auf seiner unteren Seite mit einem Hebel (24) ausgestattet ist, der fest verbunden mit dem Träger montiert ist, und Nocken bildende Profilelemente (25) unterhalb des Wegs der Träger (5) angeordnet sind, wobei das freie Ende des Hebels sich auf die Profilelemente stützt, um den betrachteten Träger zu schwenken.

9. Anlage nach Anspruch 6, **dadurch gekennzeichnet, daß** die Einrichtungen zum Einstellen des Abstands zwischen den Trägersockeln durch die Antriebseinrichtungen zur Verschiebung der Sockel gebildet werden.

## Claims

1. A method of firing ceramic articles in a kiln, the method consisting in placing each article on a support and then in moving it inside a kiln in order to perform firing, the method being **characterized in that** it consists in placing each article on a support (5) which is tiltable between a substantially horizontal position and a substantially vertical position, and in causing the tilt of the support (5) to vary while the support is moving so that it is substantially horizontal in at least one zone (3) of the kiln in which the temperature is such that the article to be fired becomes plastic.

2. A firing method according to claim 1, **characterized in that** it consists in modifying the spacing between two successive supports (5) in the travel direction thereof so that the spacing between the supports (5) is greater when the supports are tilted in the horizontal position and smaller when they are tilted in the vertical position.

3. A firing method according to claim 2, **characterized in that** it consists in changing on the spacing between the supports (5) so as to change the tilt thereof.

4. A firing method according to any one of claims 1 to 3, **characterized in that** it consists, for each support (5), in placing it substantially horizontally at an article-loading station (8), in then causing it to tilt up towards a tilted-up position, said tilted-up position being maintained while the support is being transferred into the kiln, in causing it to tilt down into a substantially horizontal position in the hottest zone (3) or in the temperature zone in which the article is in a malleable state, and finally in bringing it in a tilted-up position to an unloading station (9) where the support is put back in a flat position.

5. Apparatus for firing ceramic articles in a kiln, the apparatus comprising article supports and being **characterized in that** each article support (5) is pivotally mounted on a moving base (6), such as a carriage, to pivot about a horizontal axis (10) extending transversely relative to the support travel direction, means being provided for ensuring that each support pivots about its axis while said base is moving.

6. Apparatus according to claim 5, **characterized in that** it includes means for adjusting the spacing between the support bases, the bases being of a length that is shorter than the length of the supports.

7. Apparatus according to claim 5 or claim 6, **characterized in that** each support (5) is fitted with a series of parallel links (13, 16, 19, 20) hinged firstly to the bottom face of the support and secondly to the base of the adjacent support about axes (12, 14, 17, 18, 22, 23) that are horizontal and that extend transversely to the travel direction of the supports.

8. Apparatus according to claim 5 or claim 6, **characterized in that** each support (5) is fitted on its bottom face with a lever (24) mounted as an integral part of the support, and cam-forming shaped elements (25) are placed beneath the path followed by the supports (5) with the free end of the lever bearing against the shaped elements in order to cause the support in question to pivot.

9. Apparatus according to claim 6, **characterized in that** the means for adjusting the spacing between support bases are constituted by the means for driving and moving the bases.
